(19) Europäisches Patentamt

European Patent Office

Office européen des brevets

(11) **EP 2 461 563 A1**

(12) **EUROPEAN PATENT APPLICATION**

(43) Date of publication:
**06.06.2012 Bulletin 2012/23**

(51) Int Cl.:
***H04N 1/32*** *(2006.01)*

(21) Application number: **11191612.8**

(22) Date of filing: **01.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.12.2010 RU 2010149285
22.11.2011 KR 20110122460**

(71) Applicant: **Samsung Electronics Co., Ltd.
Suwon-si, Gyeonggi-do 442-742 (KR)**

(72) Inventors:
• **Safonov, Ilia Vladimirovich
119571 Moscow (RU)**
• **Rychagov, Michael Nikolaevich
124482 Moscow (RU)**
• **Lee, Ho-keun
Suwon-si (KR)**

(74) Representative: **Waddington, Richard
Appleyard Lees
15 Clare Road
Halifax, Yorkshire HX1 2HY (GB)**

(54) **System and method of printing micro-pictures for anti-counterfeiting and copy protection**

(57)    An image forming apparatus includes an image reader unit to scan a page to be printed, a security mark acquisition unit at least one security mark, an image process unit to perform image blending by applying parameters preset in the scanned page to be printed and the security mark, a control unit to provide the image process unit with the preset parameters, and an output unit to output an image blended of the image process unit.

# FIG. 2

**Description**

BACKGROUND OF THE INVENTION

1. Field of the Invention

The present general inventive concept relates to system and method of digital microprinting for anti-counterfeiting and copy-protection of documents, and more particularly, to system and method of creation of customized and personalized micro-pictures and printing on consumer printing devices.

2. Description of the Related Art

The microprinting is widely used for protection of the important documents and banknotes against fake. Professional offset printers are used for this purpose. Recently, several approaches for printing microtext or images with special microstructures on relatively cheap consumer electronics printing devices were proposed. Such methods are intended for protection of printed documents against copying by means of home copiers and multifunctional devices (MFD). Also such methods complicate the falsification of documents, which is carried out by means of standard office equipment.

US patent application publication US 20030021437 describes a method for protection of printed document by printing of additional image with special microstructure. The image is created from various elements, such as text, vector graphics, bitmaps, whose shapes vary according to color. This image is too big compared with a page and occupies a significant area on the page. However, this publication does not show a procedure for creation such images on-the-fly and also a procedure of adjusting an image view for the user.

US patent application publication US 20070252838 describes a method and system for printing of microtext. A specific microfont based on using of PostScript Type 3 font is proposed in this publication. Main drawbacks of using of this microfont are that the microfont contains only a limited set of symbols of a fixed form for several languages and also should be licensed.

The creation of microfont on-the-fly from any font is allowed to overcome above mentioned disadvantages, as described in US patent application publication 20090185210, based on the initial Russian Federation patent application 2008101807. In these publication and application, a method of creation of symbols for microprinting is described, including definition for each symbol of the image of the suitable font size, considering rules of creation of small fonts. Thus, symbol rasterization in bitmap is performed, bitmap is skeletonized, bitmap is reformatted with saving of intelligibility of the symbol, and cells of halftoning are formed from the reformatted bitmap. These application and publication may relate to the present general inventive concept.

However, since each microfont contains only a limited set of symbols, it is difficult to provide printing an arbitrary image using a conventional method. Theoretically it may be possible, but demands require considerable efforts and high user qualification. That is, a user has few possibilities or options for creation of the customized original protective elements, and destroying them at copying on consumer copying devices at usage of the microtext.

As described above, it is necessary to provide a more effective method for protection of printed documents against copying by means of home copiers in using the microtext.

SUMMARY OF THE INVENTION

The present general inventive concept provides a more effective and efficient system and method of creating and adjusting an image to form a micro-picture for anti-counterfeiting and copy-protection.

Additional aspects and advantages of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows .

The foregoing and/or other aspects and utilities of the present general inventive concept may be achieved by providing a system and method of printing automatically created and adjusted micro-pictures on a printing medium in consumer printing devices for anti-counterfeiting and copy-protection.

The method of micro-pictures printing may include a method of creating a micro-picture from a random image provided by a user.

The system may performs the method of micro-picture printing for anti-counterfeiting and copy-protection by creating of the micro-picture from a random image provided by a user.

The system of printing of micro-pictures for anti-counterfeiting and copy-protection may include an image registration module to register at least one image provided by a user and to output the registered image, a parameters adjustment module to adjust micro-picture creation parameters and parameters for blending the micro-picture with printing page image and output the parameters, a micro-picture creation module to receive the image from the image registration module and to adjust the received image according to the parameters received from the parameters adjustment module to create a micro-picture and output the created image, an images blending module to blend at least one micro-picture corresponding to the created image, obtained from image registration module and according to the parameters of the parameters adjustment module, and a printing module to print the blended image.

The method of printing of micro-pictures for anti-counterfeiting and copy-protection may include obtaining an image from a user, creating the micro-picture from the image obtained from the user, blending the micro-picture with an image of a printing page, and printing the blended image.

The foregoing and/or other aspects and utilities of the present general inventive concept may also be achieved by providing a system to print micro-pictures for anti-counterfeiting and copy-protection may include a micro-picture selection module to select at least one micro-picture from a set of images, a parameters adjustment module to adjust parameters to blend the micro-picture and a page image, an images blending module to blend the page image and at least one micro-picture, corresponding to the selected image obtained from the micro-picture selection module and according to the parameters of the parameters adjustment module, and a printing module to print the blended image.

The system and method of printing of micro-pictures for anti-counterfeiting and copy-protection may include obtaining a micro-picture, blending the micro-picture with a printed page image, and printing the blended image.

The method of creation of micro-picture from random may include detecting edges, and transforming the detected edges to the micro-picture that has dimensions less than several millimeters as a line-drawing picture.

The methods and system may allow a user to create a micro-picture from a random image and to print the created micro-picture blended with a printed page image. Such a micro-picture may be customized and personalized mark, which image worsens irrevocably at a document copying operation to be performed on consumer copying devices.

The foregoing and/or other aspects and utilities of the present general inventive concept may also be achieved by providing an image forming apparatus to print one or more micro-pictures for anti-counterfeiting and copy-protection of an original image, the image forming apparatus including a security mark acquisition unit to receive an image as a security mark, a processing unit to adjust and blend the security mark and a page image to form a blended image, and an output unit to print the blended image.

BRIEF DESCRIPTION OF THE DRAWINGS

The above and/or other aspects of the present general inventive concept will become apparent and more readily appreciated from the following description of the exemplary embodiments, taken in conjunction with the accompanying drawings, in which:

FIG. 1 is a view illustrating one or more micro-pictures usable for copy-protection according to an embodiment of the present general inventive concept;

FIG. 2 is a view illustrating a micro-picture printing system for anti-counterfeiting and copy-protection according to an embodiment of the present general inventive concept;

FIG. 3 is a view illustrating a micro-picture printing system for anti-counterfeiting and copy-protection according to an embodiment of the present general inventive concept;

FIG. 4 is a view illustrating a method of micro-picture printing for anti-counterfeiting and copy-protection according to an embodiment of the present general inventive concept;

FIG. 5 is a view illustrating a method of micro-picture printing for anti-counterfeiting and copy-protection according to an embodiment of the present general inventive concept;

FIG. 6 is a view illustrating a method of creating a micro-picture from a random image according to an embodiment of the present general inventive concept;

FIG. 7 is a view illustrating a method of creating a micro-picture according to an embodiment of the present general inventive concept;

FIG. 8 is a view illustrating an image histogram with threshold values, usable for an image contrast enhancement according to an embodiment of the present general inventive concept;

FIG. 9 is a view illustrating a printed micro-picture and a micro-picture deteriorated due to copying, respectively, according to an embodiment of the present general inventive concept; and

FIG. 10 is a view illustrating an image forming apparatus according to an exemplary embodiment of the present general inventive concept.

DETAILED DESCRIPTION OF THE EXEMPLARY EMBODIMENTS OF THE INVENTION

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

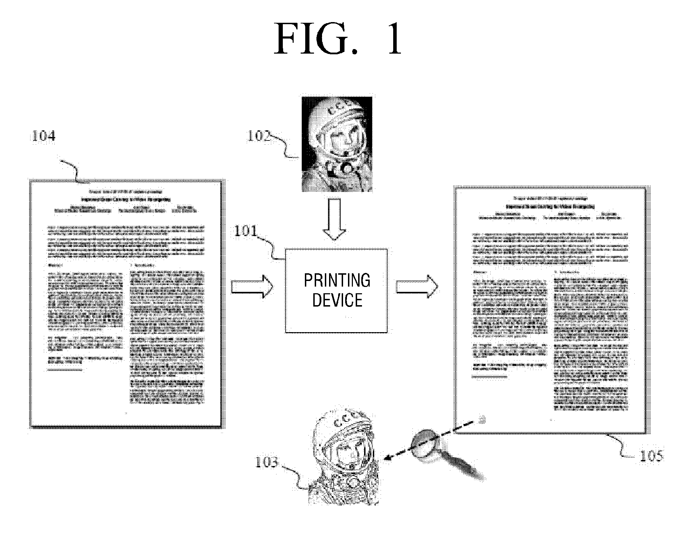

In the exemplary embodiment the claimed general inventive concept is realized in a printer: laser or ink-jet printer or multi-functional printer (MFP). FIG. 1 illustrates an example of application of a micro-picture for copy-protection. In order to create customized and personalized copy protection and anti-counterfeiting mark, a user transfers an original photo 102 to a printing device 101 by a conventional method, that is supplied by the described system for micro-picture printing, and adjusts parameters such as number of micro-pictures on a page and their position, ink color for micro-picture printing, etc. The micro-picture may have a height from 0.5 to 2.5 mm according to an exemplary embodiment, and dimensions of a micro-picture in pixels are depended on a printing resolution. A micro-picture 103 is created automatically from the image, provided by the user. A micro-picture looks like a miniature line-drawing (sketch, draft), formed with a small number of lines on a white background, wherein a thickness of a majority of lines is less 80-85 micrometers (around 1/300 of inch). This micro-picture is blended with a printed page 104 at least one selected position of a blended print image105.

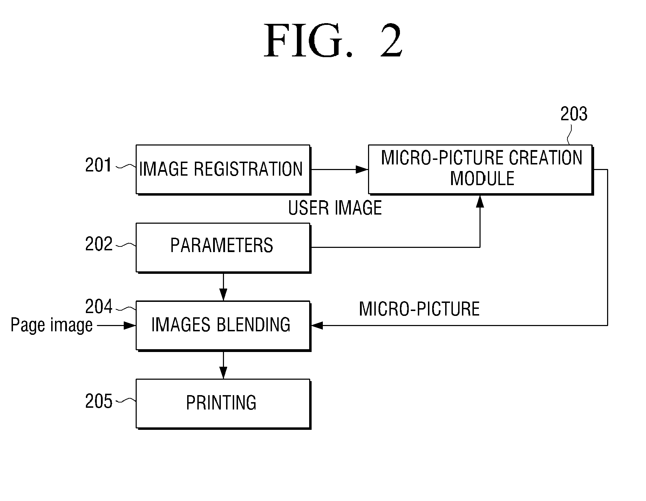

FIG. 2 illustrates a system to print a micro-picture for anti-counterfeiting and copy-protection. An image registration module 201 registers at least one image provided by a user as a user image and transfers the registered image to a micro-picture creation module 203. The image registration module 201 can be implemented in a form of an image capture device, such as scanner or camera, in a form of a wired or wireless interface for data transfer or in a form of a data storage device, for example, a flash-memory, an HDD, etc. A parameter adjustment module 202 may adjust one or more parameters of creation of micro-pictures and parameters of blending of the micro-picture and a page image as a blended page image to be printed. At least the following parameters are adjusted in this module: a number of micro-pictures on a page and respective positions, a size of the micro-picture, a color ink for micro-picture printing, a line thickness in the micro-picture, a mode of blending of the micro-picture and the page image. The parameters are transferred to the micro-picture creation module 203 and an image blending module 204. The micro-picture creation module 203 creates a micro-picture from the image obtained from the image registration module 201 and according to the parameters obtained from the parameter adjustment module 202. The micro-picture is transferred to the images blending module 204. The image blending module 204 blends at least one micro-picture obtained from the micro-picture creation module and according to the parameters obtained from the parameter adjustment module 202 and the page image. The blended image is transferred to a printing module 205, which prints this image as the blended page image.

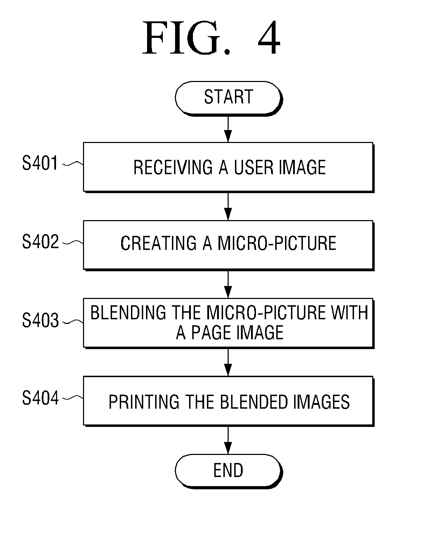

A method of micro-picture printing for anti-counterfeiting and copy-protection of FIG. 2 is illustrated in FIG. 4. A random image, i.e., an image of any size, with any color depth, etc., is obtained from a user by means of scanner of a camera, by means of obtaining of an image via a wired or wireless interface, or by means of reading from a storage device, for example, a flash memory or an HDD, at operation S401. A micro-picture is created from the image obtained from the user at operation S402. The micro-picture is blended with a page image according to a predefined position and with a mode of blending at operation S403. The blending mode may be a mode where a corresponding part of a page image is replaced with a micro-picture; a corresponding part of a page image is replaced with an inverted micro-picture; a by-pixel logical OR operation for a micro-picture and a corresponding part of a page image is performed; a by-pixel logical AND operation for a micro-picture and a corresponding part of a page image is performed; a by-pixel logical XOR operation for a micro-picture and a corresponding part of a page image is performed. The blended image is printed at operation S404.

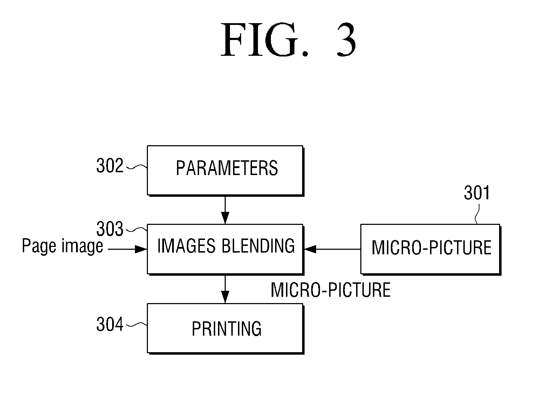

FIG. 3 illustrates a system to print a micro-picture for anti-counterfeiting and copy-protection according to an embodiment of the present general inventive concept. A micro-picture selection module 301 selects at least one micro-picture from a set of pictures, and then the selected micro-picture is transferred to an image blending module 303. A parameter adjustment module 302 adjusts one or more parameters for blending one or more micro-pictures with a page image and the adjusted parameters are transferred to the image blending module 303. The parameters adjusted in the parameter adjustment module 302 may be a parameter corresponding to: a number of micro-pictures on a page and respective positions; a color ink for micro-picture printing; a mode of blending of a micro-picture and a page image, etc. The image blending module 303 blends at least one micro-picture, received from the micro-picture selection module 301 and according to the parameters of the parameter adjustment module 302, with the page image to output a blended image. A printing module 304 prints the blended image.

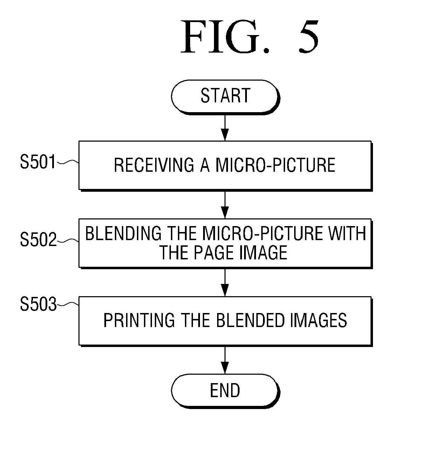

A method of micro-picture printing for anti-counterfeiting and copy-protection of FIG. 3 is illustrated in FIG. 5 according to an embodiment of the present general inventive concept. A micro-picture is obtained at operation S501 from a user by transferring of a micro-picture via a wired or wireless interface or by means of reading from a storage device, for example, from a flash memory or HDD. The micro-picture is blended with a page image in predefined positions and according to a selected blended mode at operation S502.The mode of this embodiment may be similar to the mode of FIGS. 2-4. The blended image is printed at operation S503.

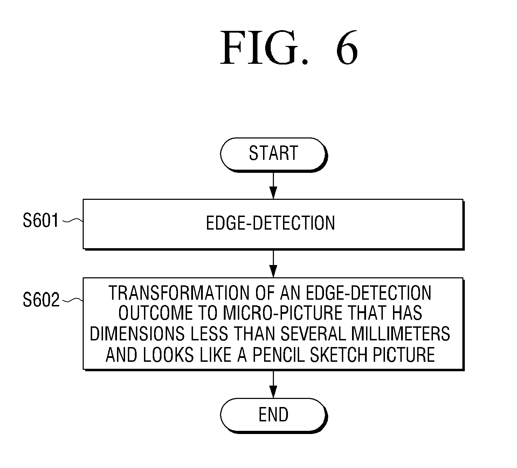

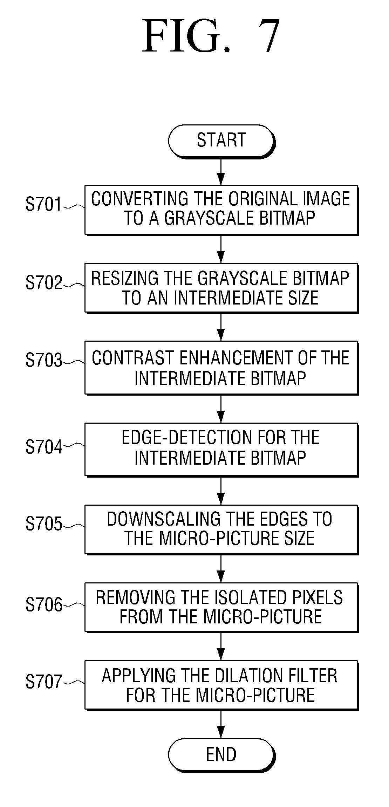

The above-described methods may include a method of creation of a micro-picture as illustrated in FIGS.6 and 7 according to an embodiment of the present general inventive concept. Operations from S701 to S704 of FIG. 7 correspond to an edge-detection operation S601 of FIG. 6, i.e., conversion of an image of one or more edges to a micro-picture. An original image may be converted to a grayscale image at operation S701. There may be several methods of obtaining a grayscale image from components of a color image according to a conventional converting method (for example, ADOBE PHOTOSHOP application on site http://www.photoshopsupport.com/tutorials/cb/halftone.html). The methods are the following:

$$I = 0.3r + 0.6g + 0.1b\,;$$

$$I = (r + g + b)/3\,;$$

$$I = \max(r, g, b)\,,$$

where *r, g, b* color channels of an original image, and I is an intermediate image.

Although these methods are applicable, a method using $I = \max(r,g,b)$ may be explained below as an example.

A grayscale image is resized to sizes in pixels of an intermediate image at operation S702. Dimensions of the intermediate image may be 3 times greater than a micro-picture. Any interpolation technique can be applied during a resizing operation. However, a bilinear interpolation may be used as an example to provide a good effectiveness between image quality and computational complexity.

A contrast enhancement is performed at operation S703 so that a micro-picture can be recognizable even for low-contrast bitmaps.

A low boundary of a range for contrast adjustment is calculated according to the expression:

$$low = \min(\ T, \min\{i\,|\,H[i] \geq H_0\}, \min\{i\,|\,\sum_{k=0}^{i} H[k] \geq C_0\}),$$

where *H0, C0* and *T* are threshold values to histogram level, histogram area and histogram intensity, respectively. Threshold T is applied to avoid excessive image darkening.

A high boundary of the range for contrast adjustment is defined as follows:

$$high = \max(\ \max\{i\,|\,H[i] \geq H_1\}, \max\{i\,|\,\sum_{k=i}^{2^n-1} H[k] \geq C_1\}),$$

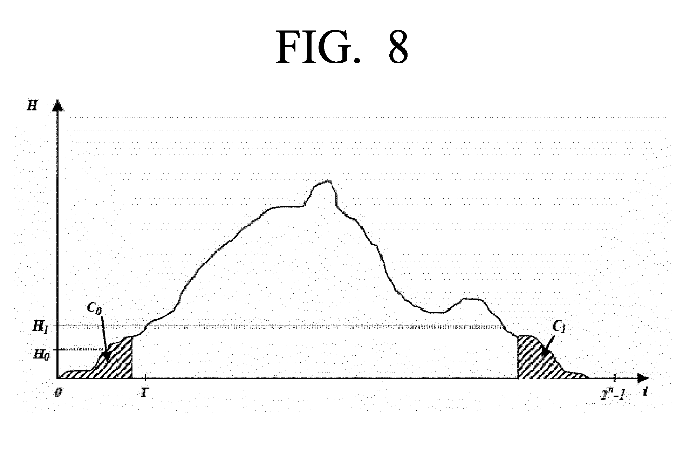

where *H1* and *C1* are threshold values for histogram intensity and area correspondingly, respectively. FIG 8 illustrates these thresholds as example of a histogram of brightness.

After computation of the ranges for contrast adjustment *low* and *high,* a global contrast enhancement is performed:

$$I(x,y) = 255\times (I'(x,y) - low) / (high - low),$$

where *(x,y)* - pixel coordinates of intermediate bitmap, *I'* and *I* are intermediate images before and after contrast adjustment, respectively.

Edges are detected on an intermediate bitmap at operation S704. Several known conventional methods of detection of edges can be applied. Diffrence-of-Gausians (DoG) filter with subsequent thresholding is explained below as an example to be applied to this embodiment:

$$G_{\sigma_1}(x,y) = \frac{1}{\sqrt{2\pi\sigma_1^2}} e^{-\frac{x^2+y^2}{2\sigma_1^2}} \quad G_{\sigma_2}(x,y) = \frac{1}{\sqrt{2\pi\sigma_2^2}} e^{-\frac{x^2+y^2}{2\sigma_2^2}} \quad ;$$

$$E = \begin{cases} 1, & (I * G_{\sigma_1} - I * G_{\sigma_2}) < T \\ 0, & otherwise \end{cases},$$

where *I* is an intermediate bitmap of contrast adjustment, *E* is an image of edges, *T* is a threshold, and * designates convolution. Difference-of-Gaussians filter parameters $\sigma_1$, $\sigma_2$ and threshold T depend on a type of a printing device and a printing resolution.

An image of edges is downscaled to a micro-picture with *M* dimensions, i.e., in 3 times at operation S705. For this purpose an image *E* is divided on 3 by 3 non-overlapped blocks, and a following rule is applied for each block: if a sum of pixels in a block is greater than 4, then a corresponding pixel in a micro-picture *M* is equal one, otherwise pixel in micro-picture *M* is zero.

At operation S706, isolated pixels on a micro-picture M is removed:

$$M(x,y) = 0 \mid \text{if } \sum_{r=x-1}^{x+1}\sum_{c=y-1}^{y+1} M(r,c) == 0.$$

At operation S707, morphological filter of dilation is applied to a micro-picture. This operation is necessary for high printing resolution, because too thin regions may not be printed on printing devices during high-resolution printing. Parameters of the morphological filter of dilation, such as aperture (structure element, mask) and number of iterations, are dependent on a type of a printing device and printing resolution. Operations S705 to S707 of FIG. 7 may correspond to operation S602 of FIG. 6

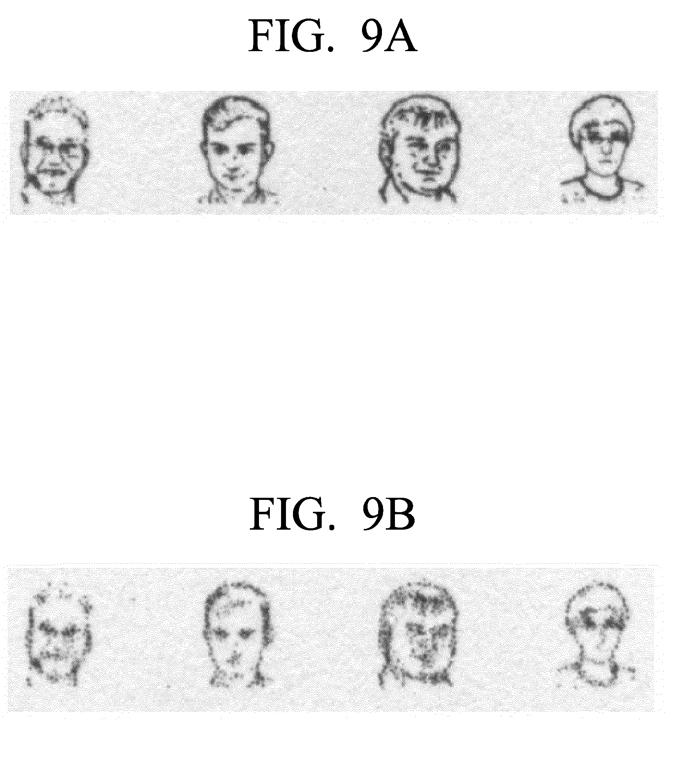

FIG. 9A illustrates an example of printed micro-pictures and FIG. 9B illustrates an example of copied micro-pictures, to show how a given micro-picture deteriorates due to copying. For this example, a height of the printed micro-picture is about 2 mm. For purpose of demonstration these images were scanned with optical resolution 2400 dpi.

Although the above-described system and method are illustrated as examples, the present general inventive concept is not limited thereto. It is possible that the system and method can be applied to another electronic apparatus, and the components and operations of the system and method can be replaced, modified, or changed to substantially perform the function thereof.

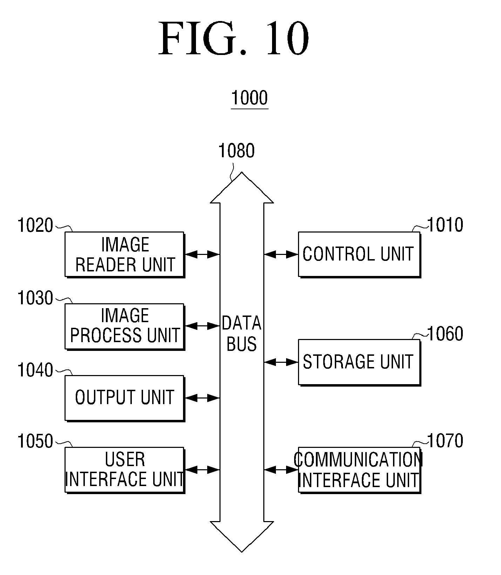

FIG. 10 illustrates an image forming apparatus 1000 according to an exemplary embodiment of the present general inventive concept.

Referring to FIG. 10, the image forming apparatus 1000 may include a control unit 1010, an image reader unit 1020, an image processing unit 1030, an output unit1040, a user interface unit 1050, a storage unit 1060, a communication interface unit 1070, and a data bus 1080.

The image forming apparatus 1000may be connected to an external device, has a function of outputting document data, and can be embodied in various forms such as printer, scanner, digital copier, facsimile, or multi-function peripheral (MFP) embodying two or more of the above functions in combination by a single device.

The control unit 1010 controls functions of the image forming apparatus 1000. Accordingly, the control unit 1010 can control a variety of components equipped in the image forming apparatus 1000. Here, the control unit 1010 can be embodied as a central processing unit (CPU).

Further, the control unit 1010 may provide a parameter or a preset parameter for image blending in the image process unit 1030. Here, the preset parameter may be at least one parameter among parameters for the number and a location of a security mark on a page to be printed, a size of the security mark, a color ink for printing the security mark, a line thickness of the security mark, and a blending mode of the security mark and the page to be printed.

It is possible that the control unit 1010 may provide a parameter for generating a security mark in a security mark acquisition unit (not illustrated).

Here, the security mark can be embodied as a micro-picture described above.

The image reader unit 1020 performs a function of reading pages to be printed using an image sensor. Further, the image reader unit 1020 can perform a function of scanning a specific image to acquire an image corresponding to a security mark.

Meanwhile, the image reader unit 1020 can be embodied as a scan module (not illustrated) which performs a scanning operation.

The scan module (not illustrated) performs a scanning operation according to the control of the control unit 1010, and includes an image sensor unit (not illustrated), a motor unit (not illustrated), a location sensor unit (not illustrated), and a scan control unit (not illustrated).

The image sensor unit (not illustrated)may include a CMOS image sensor (CIS, not illustrated) to obtain an RGB pixel value corresponding to an image which is sensed, and sends the RGB pixel value sensed from each location through CIS to the scan control unit (not illustrated).

The motor unit (not illustrated) transfers a document in a scanning direction so as to sense an RGB pixel value corresponding to an image formed in the document line by line.

The location sensor unit (not illustrated) senses a location of a document placed in the image forming apparatus 100, and sends the sensed location to the scan control unit (not illustrated). The scan control unit (not illustrated) controls the image sensor unit (not illustrated), the motor unit (not illustrated), and the location sensor unit (not illustrated) so as to perform a scanning operation according to a scan command received from the control unit 1010.

In other words, the scan control unit (not illustrated) combines RGB pixel values sensed by the image sensor unit (not illustrated) and generates image data corresponding to an image formed in a document. Since other elements and operations of the image reader unit 1020 are well known, detail explanations thereof are omitted.

The image process unit 1030 has a function of carrying out an image process for input data according to the control of the control unit 1010.

The image process unit 1030 can process image blending of a page to be printed, which is scanned in the image reader unit 1020, for example, and a security mark acquired in the security mark acquisition unit (not illustrated), for example. In this case, the image process unit 1030 can perform the image blending using a preset parameter provided in the control unit 1010.

The output unit 1040 performs a printing operation of printing data, which is image-processed by the image process unit (not illustrated) according to the control of the control unit 1010, on a recording medium and outputting the data. It is possible that the output unit 1040 can output an image on a page to be printed in the image process unit 1030 and an image blended with a security mark. In this case, only one selected ink can be used to print micro-pictures. For example, printing by a yellow toner among a plurality of color toners can generate a copy protection mark which may be unnoticeable.

The user interface unit 1050 may include an operation key (not illustrated) in which is input a user's command to control operations of the image forming apparatus 1000 and a display window (not illustrated) such a liquid crystal display (LCD) for displaying a status of the image forming apparatus. Further, the user interface unit 1050 can be embodied as a device which embodies input and output simultaneously such as touch screen display, and the like.

The user interface unit 1050 can display various information provided in the image forming apparatus 1000, a status of a job in progress in the image forming apparatus 1000, and the result thereof. Users can confirm various print jobs in the image forming apparatus 1000 through the user interface unit 1050, and manage and control the print jobs.

The user interface unit 1050 can provide a user interface to adjust one or more parameters, for example, positions and sizes of micro-pictures on a page to be printed, and a user interface to select one or more micro-pictures.

In such a case, an original image can be input to the image forming apparatus through the communication interface unit 1070 to correspond to a page or an image corresponding to the security mark. Here, the communication interface unit 1070 may have a unit to provide data communication with an external device (not illustrated) via network. For example, the communication interface unit 1070 can be embodied in a form of a wired or wireless communication module which can support DLNA network, local system, LAN (Local Area Network), and internet network, and the like. Further, the external device (not illustrated) may be a host device such as personal computer (PC), a server unit, an external image forming apparatus, etc.

The original image may be an image read from a memory card through a card reader unit (not illustrated).

Further, a hard copy of the original image can be scanned by the image reader unit 1020.

Meanwhile, the original image can be stored in the storage unit 1060. An image corresponding to the security mark can also be stored in the storage unit 1060

Here, the storage unit 1060 can be embodied as a storage medium such as memory or HDD in the image forming apparatus 1000 and an external storage medium, for example a storage medium connected to a removal disk including a USB memory and host, and a web server via network.

It is possible that the storage unit 1060 can store a program code which can generate binary micro-pictures from the original image.

It is also possible that the storage unit 1060 can store a plurality of security marks which is preset, and in this case, the security mark acquisition unit (not illustrated) can select at least one of the plurality of security marks to acquire the selected security mark.

Meanwhile, the control unit 1010 can control the image process unit 1030 so that an image on a page to be printed is blended with a security mark by using at least one of an operation of replacing a preset portion of the image on a page to be printed with the security mark, an operation of replacing a preset portion of the image on a page to be printed with an inverted security mark, an operation of performing a by-pixel logical OR operation for portions corresponding to a security mark and an image on a page to be printed, an operation of performing a by-pixel logical AND operation for portions corresponding to a security mark and an image on a page to be printed, and an operation of performing a by-pixel logical XOR operation for portions corresponding to a security mark and an image on a page to be printed.

Accordingly, the control unit 1010 can generate binary micro-pictures from the original image by executing a program code stored in the storage unit 1060.

The data bus 1080 can support data transmission between system modules of the image forming apparatus 1000.

Meanwhile, in the exemplary embodiment, it is explained that the functions of generating micro-pictures is controlled by the components equipped in the image forming apparatus 1000. However, this is merely an exemplary embodiment, the present general inventive concept is not limited thereto, and the functions described above can be controlled by a printer driver (not illustrated) or an application (not illustrated) equipped in a host device (not illustrated) connected to the image forming apparatus 1000.

Meanwhile, according to the exemplary embodiment, it may include a storage medium including a program as computer-readable codes for performing a printing method of the image forming apparatus according to an exemplary embodiment as described above, i.e. a computer-readable recording medium. The computer-readable recording medium includes all sorts of recording media storing data which can be read by a computer system. Examples of the computer-readable recording medium include ROM, RAM, CD-ROM, magnetic tape, floppy disk, and optical data storage device, and so on. The computer-readable recording medium can also be distributed over a network coupled computers systems so that the computer-readable code is stored and executed in a distributed fashion.

Although the invention has been shown and described with reference to the preferred embodiments thereof, it is not to be construed as limiting the specific embodiments and will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of printing one or more micro-pictures for anti-counterfeiting and copy-protection in an image forming system, the method comprising:

    receiving an image from a user;

creating a micro-picture from the image received from the user;
blend the micro-picture with the image of a printing page to generate a blended image;
printing the blended image.

2. The method of claim 1, wherein the image from the user is received by a wired or wireless interface.

3. The method of claim 1 or 2, wherein the receiving the image comprises reading the image from a storage device, which is a flash memory or a hard disk drive (HDD).

4. The method of any one of claims 1 to 3, wherein the image from user is received by means of an image capture device which is a scanner or a camera.

5. The method of any one of claims 1 to 4, wherein the micro-picture is blended with the page image using one of:

replacing a corresponding part of the page image by the micro-picture;
replacing a corresponding part of the page image by an inverted micro-picture;
performing a by-pixel logical OR operation for the micro-picture and a corresponding part of the page image;
performing a by-pixel logical AND operation for the micro-picture and a corresponding part of the page image;
performing a by-pixel logical XOR operation for the micro-picture and a corresponding part of the page image.

6. The method of claim 6, further comprising:

detecting one or more contour differences of the image as a contour image; and
converting the contour images into the micro-picture having dimensions of a few millimeters and resembling a pencil sketch.

7. The method of claim 6, wherein the detecting the contour differences comprises:

converting an original image into a grayscale bitmap;
resizing the bitmap to an intermediate size;
enhancing a contrast of the intermediate bitmap;
detecting the contour differences on the intermediate bitmap.

8. The method of claim 7, wherein the original image is converted into a grayscale bitmap using one of the following formulas:

$$I = 0.3r + 0.6g + 0.1b \, ;$$

$$I = (r + g + b)/3 \, ;$$

$$I = \max(r, g, b) \, ,$$

where *r, g, and b* are color channels of the original image.

9. An image forming apparatus comprising,
an image reader unit to scan a page to be printed;
a security mark acquisition unit to acquire at least one security mark;
an image process unit to perform image blending by applying the scanned page to be printed and a parameter preset in the security mark to generate a blended image;
a control unit to provide the image process unit with the preset parameter; and
an output unit to output the blended image.

10. The image forming apparatus of claim 9, wherein the control unit adjusts at least one parameter of parameters for number and position of the security mark on a page, a size of the security mark, a color ink for printing the security mark, a line thickness of the security mark, and a blending mode of the security mark and the page to be printed, and provides the at least one adjusted parameter with the image process unit.

11. The image forming apparatus of claim 9, wherein the image reader unit provides the security mark acquisition unit with a specific image which is scanned, and the security mark acquisition unit acquires the at least one security mark from the scanned image.

12. The image forming apparatus of claim 9, further comprising:

a storage unit to store a plurality of security marks which is predefined,
wherein the security mark acquisition unit selects the at least one security mark from the plurality of security marks.

13. The image forming apparatus of claim 9, wherein the control unit controls the image process unit so that the page image is blended with the security mark by using at least one of an operation of replacing a preset portion on the page image with the security mark, an operation of replacing a preset portion on the page image with an inverted security mark, an operation of performing a by-pixel logical OR operation for portions corresponding to the security mark and the page image, an operation of performing a by-pixel logical AND operation for portions corresponding to the security mark and the page image, and an operation of performing a by-pixel logical XOR operation for portions corresponding to the security mark and the page image.

14. The image forming apparatus of claim 12, wherein the storage unit comprises a flash memory or an hard disk drive (HDD).

15. The image forming apparatus of any one of claims 9 to 14, wherein the security mark acquisition unit acquires the security mark captured by an image capture device.

# FIG. 1

# FIG. 2

201 — IMAGE REGISTRATION

203

MICRO-PICTURE CREATION MODULE

USER IMAGE

202 — PARAMETERS

204 — IMAGES BLENDING

Page image →

MICRO-PICTURE

205 — PRINTING

# FIG. 3

302 — PARAMETERS

301

303 — Page image → IMAGES BLENDING ← MICRO-PICTURE

MICRO-PICTURE

304 — PRINTING

# FIG. 4

```
                    ( START )
                        │
                        ▼
S401 ─┐   ┌─────────────────────────────┐
      └───│    RECEIVING A USER IMAGE    │
          └─────────────────────────────┘
                        │
                        ▼
S402 ─┐   ┌─────────────────────────────┐
      └───│    CREATING A MICRO-PICTURE  │
          └─────────────────────────────┘
                        │
                        ▼
S403 ─┐   ┌─────────────────────────────┐
      └───│ BLENDING THE MICRO-PICTURE WITH │
          │        A PAGE IMAGE          │
          └─────────────────────────────┘
                        │
                        ▼
S404 ─┐   ┌─────────────────────────────┐
      └───│   PRINTING THE BLENDED IMAGES │
          └─────────────────────────────┘
                        │
                        ▼
                    ( END )
```

# FIG. 5

START

S501 — RECEIVING A MICRO-PICTURE

S502 — BLENDING THE MICRO-PICTURE WITH THE PAGE IMAGE

S503 — PRINTING THE BLENDED IMAGES

END

# FIG. 6

```
                    ┌─────────────┐
                    │    START    │
                    └──────┬──────┘
                           │
                           ▼
S601 ─┐ ┌────────────────────────────────────────────┐
      └─│              EDGE-DETECTION                  │
        └──────────────────────┬─────────────────────┘
                               │
                               ▼
S602 ─┐ ┌────────────────────────────────────────────┐
      └─│  TRANSFORMATION OF AN EDGE-DETECTION         │
        │  OUTCOME TO MICRO-PICTURE THAT HAS           │
        │  DIMENSIONS LESS THAN SEVERAL MILLIMETERS    │
        │  AND LOOKS LIKE A PENCIL SKETCH PICTURE      │
        └──────────────────────┬─────────────────────┘
                               │
                               ▼
                    ┌─────────────┐
                    │     END     │
                    └─────────────┘
```

# FIG. 7

START

S701 — CONVERTING THE ORIGINAL IMAGE TO A GRAYSCALE BITMAP

S702 — RESIZING THE GRAYSCALE BITMAP TO AN INTERMEDIATE SIZE

S703 — CONTRAST ENHANCEMENT OF THE INTERMEDIATE BITMAP

S704 — EDGE-DETECTION FOR THE INTERMEDIATE BITMAP

S705 — DOWNSCALING THE EDGES TO THE MICRO-PICTURE SIZE

S706 — REMOVING THE ISOLATED PIXELS FROM THE MICRO-PICTURE

S707 — APPLYING THE DILATION FILTER FOR THE MICRO-PICTURE

END

# FIG. 8

# FIG. 9A

# FIG. 9B

# FIG. 10

1000

1080

1020 — IMAGE READER UNIT

1030 — IMAGE PROCESS UNIT

1040 — OUTPUT UNIT

1050 — USER INTERFACE UNIT

DATA BUS

1010 — CONTROL UNIT

1060 — STORAGE UNIT

1070 — COMMUNICATION INTERFACE UNIT

| | Europäisches Patentamt<br>European Patent Office<br>Office européen des brevets | EUROPEAN SEARCH REPORT | Application Number<br>EP 11 19 1612 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/006257 A1 (ECOLE POLYTECH [CH]; HERSCH ROGER DAVID [CH]; WITTWER BERNARD [CH]; FO) 23 January 2003 (2003-01-23)<br>* abstract; figures 37,38,42-46 *<br>* page 30 - page 31 *<br>* page 55, line 29 * | 1-15 | INV.<br>H04N1/32 |
| X,D | & US 2003/021437 A1 (HERSCH ROGER DAVID [CH] ET AL) 30 January 2003 (2003-01-30)<br>* abstract * | 1-15 | |
| | ----- | | |
| X | US 5 761 686 A (BLOOMBERG DAN S [US]) 2 June 1998 (1998-06-02)<br>* abstract; figures 1,2,3,5,20 *<br>* column 23, line 1 - line 5 *<br>* column 4, line 54 - line 59 * | 1-15 | |
| | ----- | | |
| | | | TECHNICAL FIELDS SEARCHED (IPC)<br><br>H04N |

The present search report has been drawn up for all claims

| Place of search | Date of completion of the search | Examiner |
|---|---|---|
| The Hague | 9 February 2012 | Brans, Tim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 19 1612

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2012

| Patent document cited in search report | | Publication date | Patent family member(s) | | Publication date |
|---|---|---|---|---|---|
| WO 03006257 | A1 | 23-01-2003 | CA | 2453456 A1 | 23-01-2003 |
| | | | CN | 1646330 A | 27-07-2005 |
| | | | EP | 1404532 A1 | 07-04-2004 |
| | | | US | 2005052705 A1 | 10-03-2005 |
| | | | WO | 03006257 A1 | 23-01-2003 |
| US 5761686 | A | 02-06-1998 | JP | 10124289 A | 15-05-1998 |
| | | | US | 5761686 A | 02-06-1998 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030021437 A
- US 20070252838 A
- US 20090185210 A
- RU 2008101807